**Europäisches Patentamt**

**European Patent Office**

**Office européen des brevets**

(11) Veröffentlichungsnummer : **0 403 888 B1**

(12) **EUROPÄISCHE PATENTSCHRIFT**

(45) Veröffentlichungstag der Patentschrift :
04.11.92 Patentblatt 92/45

(51) Int. Cl.⁵ : **A01K 51/00, A01N 25/34**

(21) Anmeldenummer : **90110850.6**

(22) Anmeldetag : **08.06.90**

(54) **Wirkstoffträgerkörper für Bienenstöcke.**

(30) Priorität : **21.06.89 DE 8907584 U**

(43) Veröffentlichungstag der Anmeldung :
**27.12.90 Patentblatt 90/52**

(45) Bekanntmachung des Hinweises auf die
Patenterteilung :
**04.11.92 Patentblatt 92/45**

(84) Benannte Vertragsstaaten :
**AT DE ES FR GR IT**

(56) Entgegenhaltungen :
**EP-A- 0 224 697**
**BE-A- 890 370**
**DE-A- 3 427 330**
**DE-A- 3 538 265**

(73) Patentinhaber : **BAYER AG**
**W-5090 Leverkusen 1 Bayerwerk (DE)**

(72) Erfinder : **Bayer, Michael**
**Hainbuchenweg 6**
**W-5000 Köln 91 (DE)**

## Beschreibung

Die Erfindung betrifft einen Wirkstoffträgerkörper für Bienenstöcke in Form einer Folie bzw. Platte aus einem thermoplastischen Material.

Zur Bekämpfung von Parasitosen bei Bienen sind verschiedene Verfahren zur Applikation des Wirkstoffes bekannt. Eine Möglichkeit beruht auf der Einbringung von Wirkstoffträgerkörpern in Form von Kunststoff-Streifen, -Platten oder -Folien in die Bienenstöcke. Diese Platten bzw. Streifen sind mit einem speziellen insektiziden Wirkstoff imprägniert und werden so in den Wabengassen eines Bienenstockes plaziert, daß die Bienen damit in Berührung kommen, wobei der Wirkstoff übertragen wird. Die Positionierung der Wirkstoffträgerkörper sollte möglichst mittig zwischen zwei Waben erfolgen, um den Kontakt und die Übertragungsmöglichkeiten zum Wachs bzw. zum Honig hin zu minimieren.

Bisher mußten rechteckig aus einer Kunststoff-Folie geschnittene Trägerkörperstreifen im Bienenstock mittels geeigneter Hilfsvorrichtungen fixiert werden (siehe z.B. DE-A-35 38 688).

Der Erfindung liegt die Aufgabe zugrunde, einen einfachen kostengünstigen und anwenderfreundlichen Wirkstoffträgerkörper für Bienenstöcke zu schaffen, der schnell und hinsichtlich der Lage in reproduzierbarer Weise in die Wabengassen eingebracht und positioniert werden kann.

Diese Aufgabe wird erfindungsgemäß dadurch gelöst, daß der streifenförmige Trägerkörper an seinem oberen Ende mit einem T-förmigen Kopfteil verbunden ist, dessen symmetrisch angeordnete hakenförmige Seitenarme an parallel zur Längsrichtung verlaufenden Biegefalzlinien rechtwinklig abgeknickt werden können. Die Dicke des streifenförmigen Trägerkörpers beträgt vorteilhaft 0,5 bis 2 mm.

Vorzugsweise weist der Trägerkörper einen H-förmigen Durchbruch auf, so daß Laschen gebildet werden, die in die entsprechenden Durchbrüche eines zweiten Trägerkörpers einsteckbar sind. Auf diese Weise können zwei Trägerkörperstreifen aneinanderhängend zu einem längeren Streifen verbunden werden, um auch bei doppelstöckigen Bienenstöcken den Wirkstoffträger problemlos in den unteren Beuteteil einzubringen.

Mit der Erfindung werden folgende Vorteile erzielt:

- Die Herstellung der Trägerkörper ist aufgrund ihrer maschinenfreundlichen Formgebung wirtschaftlich und kann durch Spritzguß oder Formstanzung erfolgen.
- Die Einbringung in den Bienenstock ist einfach und problemlos und erfordert keine zusätzlichen Hilfsmittel.
- Da der T-förmige Kopfteil erst bei Bedarf aufgefaltet wird, ist eine raumsparende Verpackung möglich.

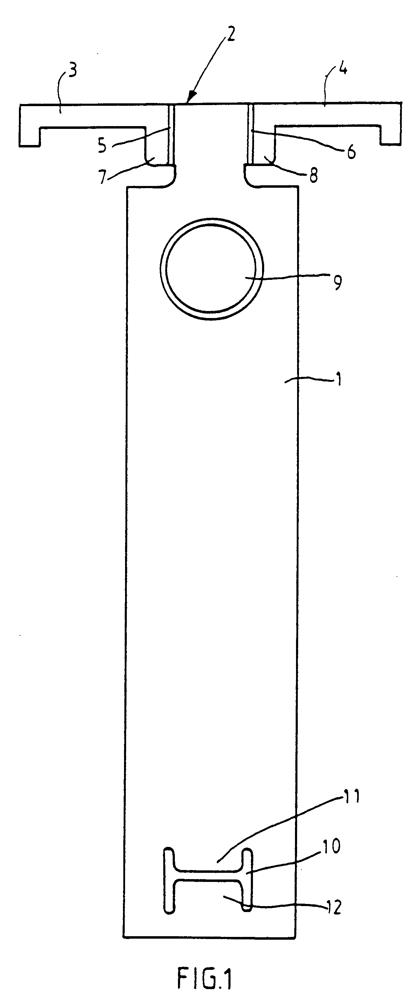

Im folgenden wird die Erfindung anhand eines in der Zeichnung dargestellten Ausführungsbeispieles näher erläutert.

Die Zeichnung zeigt eine Draufsicht auf den Wirkstoffträgerkörper. Er besteht aus einer streifenförmigen Kunststoff-Platte 1 oder -Folie mit einem am oberen Ende angesetzten T-förmigen Kopfteil 2. Die Dicke der Platte 1 beträgt ca. 1 mm. Das Kopfteil 2 besteht seinerseits aus zwei hakenförmigen Seitenarmen 3 und 4, die um die parallel zur Längsrichtung angeordneten Biegefalze 5 und 6 rechtwinklig (d.h. aus der Papierebene heraus) abgeknickt werden können. Die Biegefalze 5 und 6 werden durch rillenförmige Vertiefungen gebildet und dienen als Scharniergelenk. Im Bedarfsfall werden bei einem aus der Vorratspackung entnommenen Wirkstoffträgerkörper die zunächst flach liegenden Seitenarme 3 und 4 umgefaltet und auf den Wabenrahmen gehängt, so daß die Wirkstoffplatte 1 mittig freihängend in der jeweiligen Wabengasse gehalten wird. Zu diesem Zweck sind an der Innenseite der Seitenarme 3 und 4 Abstandshalter 7 und 8 vorgesehen.

Auf der Wirkstoffplatte 1 kann ein Warenzeichen 9 oder eine anderweitige Beschriftung eingeprägt oder aufgedruckt werden. Am unteren Ende ist in die Wirkstoffplatte 1 ein H-förmiger Durchbruch gestanzt, so daß Laschen 11 und 12 gebildet werden, die senkrecht zur Achse umgebogen werden können. Der Durchbruch 10 und die Laschen 11 und 12 dienen dazu, zwei Wirkstoffplatten miteinander zu verbinden, so daß ein Wirkstoffträgerkörper mit doppelter Länge gebildet wird. Die zweite Wirkstoffplatte ist zu diesem Zweck ebenfalls mit einem H-förmigen Durchbruch versehen. Zu diesem Zweck werden die beiden Teile so übereinander gelegt, daß die H-förmigen Durchbrüche übereinander zu liegen kommen und einer der Laschen 11, 12 in den senkrecht zur Achse angeordneten Schlitz der gegenüberliegenden zweiten Platte eingesteckt und verhakt werden, wodurch eine Fixierung erfolgt.

## Patentansprüche

1. Wirkstoffträgerkörper für Bienenstöcke in Form einer rechteckigen Folie bzw. Platte (1) aus einem thermoplastischen Material, dadurch gekennzeichnet, daß die Trägerkörperplatte (1) an ihrem oberen Ende mit einem T-förmigen Kopfteil (2) verbunden ist, dessen symmetrisch angeordnete hakenförmige Seitenarme (3, 4) an parallel zur Längsrichtung verlaufenden Biegefalzlinien (5, 6) rechtwinklig abgeknickt werden können.

2. Wirkstoffträgerkörper nach Anspruch 1, dadurch gekennzeichnet, daß die Dicke der Wirkstoffträgerplatte bzw. Folie 0,5 bis 2 mm beträgt.

3. Wirkstoffträgerkörper nach Anspruch 1 bis 2, dadurch gekennzeichnet, daß die Trägerkörperplatte (1) einen H-förmigen Durchbruch (10) aufweist und mit den dadurch gebildeten Laschen (11, 12) in entsprechende Durchbrüche an einer zweiten Trägerkörperplatte einsteckbar ist.

## Claims

1. An active-substance support for beehives in the form of a rectangular film or sheet (1) of a thermoplastic material, characterized in that, at its upper end, the support sheet (1) is connected to a T-shaped head piece (2) of which the symmetrically arranged hook-like side arms (3,4) can be bent downwards at a right angle along folding lines (5,6) extending parallel to the longitudinal direction.

2. An active-substance support as claimed in claim 1, characterized in that the thickness of the active-substance sheet or film is 0.5 to 2 mm.

3. An active-substance support as claimed in claims 1 and 2, characterized in that the support sheet (1) has an H-shaped opening (10) and, with the flaps (11,12) thus formed, can be inserted into corresponding openings in a second support sheet.

## Revendications

1. Support pour substance active pour ruches, sous forme d'une feuille ou d'une plaquette rectangulaire (1) constituée d'un matériau thermoplastique, support caractérisé par le fait que la plaquette support (1) est réunie, à son extrémité supérieure, à une partie de tête (2) en forme de T dont les bras latéraux (3,4), disposés symétriquement et en forme de crochets, peuvent être repliés perpendiculairement selon des lignes de pliage (5,6) orientées parallèlement à la direction longitudinale.

2. Support pour substance active selon la revendication 1, caractérisé par le fait que l'épaisseur de la plaquette ou de la feuille support vaut de 0,5 à 2 mm.

3. Support pour substance active selon les revendications 1 à 2, caractérisé par le fait que la plaquette support (1) présente une découpe en forme de H (10) et, par les pattes (11,12) formées de ce fait, peut s'enficher dans les découpes correspondantes existant sur une seconde plaquette support.

FIG.1